(19) **Europäisches Patentamt European Patent Office Office européen des brevets**

(11) **EP 2 922 028 A1**

(12) **EUROPEAN PATENT APPLICATION**

(43) Date of publication:
23.09.2015 Bulletin 2015/39

(51) Int Cl.:
***G06T 11/00*** *(2006.01)*

(21) Application number: 14160311.8

(22) Date of filing: 17.03.2014

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **Fraunhofer-Gesellschaft zur Förderung der angewandten Forschung e.V.**
**80686 München (DE)**
• **Technische Universität Ilmenau**
**98684 Ilmenau (DE)**

(72) Inventors:
• **Del Galdo, Giovanni**
**98693 Martinroda (DE)**

• **Römer, Florian**
**98693 Ilmenau (DE)**
• **Großmann, Marcus**
**99894 Friedrichroda (DE)**
• **Oeckl, Steven**
**91052 Erlangen (DE)**
• **Schön, Tobias**
**90453 Nürnberg (DE)**

(74) Representative: **Schenk, Markus**
**Schoppe, Zimmermann, Stöckeler Zinkler, Schenk & Partner mbB Patentanwälte Radlkoferstrasse 2 81373 München (DE)**

(54) **Exploiting residual projection data and reference data for processing data produced by imaging modality**

(57)    Apparatus which can be used in a context of image reconstruction on the basis of projection data produced by an imaging modality, such as computer tomography or magnetic resonance imaging comprises a residual projection data processor (101; 201; 301) and an image reconstruction unit (102; 202; 302). The residual projection data processor (101; 201; 301) is configured to determine residual projection data ($\Delta g$; $\Delta \tilde{g}$; $\Delta \breve{g}$) by cancelling reference projection data ($g_{ref}$; $\tilde{g}_{ref}$) from measured projection data ($g_{obs}$; $\tilde{g}_{obs}$). The measured projection data ($g_{obs}$; $\tilde{g}_{obs}$) represents a measured projection of a test object under examination obtained by an imaging modality. The reference projection data ($g_{ref}$; $\tilde{g}_{ref}$) represents a projection of a reference object. The image reconstruction unit (102; 202; 302) is configured to reconstruct a resulting residual image ($\Delta f$; $\Delta \tilde{f}$; $\Delta \breve{f}$) on the basis of the residual projection data ($\Delta g$; $\Delta \tilde{g}$; $\Delta \breve{g}$) by solving an inverse projection transformation problem that links the residual projection data ($\Delta g$; $\Delta \tilde{g}$; $\Delta \breve{g}$) to the resulting residual image ($\Delta f$; $\Delta \tilde{f}$; $\Delta \breve{f}$). The resulting residual image ($\Delta f$; $\Delta \tilde{f}$; $\Delta \breve{f}$) represents differences between the reference object and the test object under examination. A corresponding method is also described.

**(Cont. next page)**

EP 2 922 028 A1

reference object

$g_{ref}$

111a

111b

10

$\Delta g$

$-$

$+$

112a

112b

102

reconstruct
residual
image

$\Delta f$

21

10

observed object

31

20

21

32

$g_{obs}$

110a

110b

FIGURE 1C

**Description**

The present invention relates, in at least some aspects, to an apparatus for processing projection data that has been obtained by an imaging modality to obtain image data by solving an inverse projection transformation problem. The present invention also relates, in at least some aspects, to a method for obtaining a resulting residual image showing differences between a reference object and a test object. The present invention also relates, in at least some aspects, to a method to exploit a priori information in tomographic imaging applications, to a corresponding computer program or computer program product, and to a corresponding apparatus.

The object of the present invention is to provide improved concepts for processing projection data that has been obtained by means of an imaging modality, such as a computed tomography (CT), magnetic resonance imaging (MRI), positron emission tomography (PET), ultrasound imaging (echography), etc.. In particular, at least some implementations of the present invention may provide improved concepts when some reference data for a test object under examination is available, and wherein the differences between the test object and a reference object described by the reference data are relatively small when compared to the entire volume of the test object. The object of the present invention is solved by an apparatus according to claim 1, by a method according to claim 8 and by a computer program according to claim 15.

An apparatus that addresses the above mentioned objects comprises a residual projection data processor configured to determine residual projection data by cancelling reference projection data from measured projection data. The measured projection data represents a measured projection of a test object under examination obtained by an imaging modality, and wherein the reference projection data represents a projection of a reference object. The apparatus further comprises an image reconstruction unit configured to reconstruct a resulting residual image on the basis of the residual projection data by solving an inverse projection transformation problem that links the residual projection data to the resulting residual image. The resulting residual image represents differences between the reference object and the test object under examination.

A method for obtaining a resulting residual image showing differences between a reference object and a test object comprises determining residual projection data by cancelling reference projection data from measured projection data. The measured projection data represents a measured projection of the test object under examination obtained by an imaging modality. The reference projection data represents a projection of the reference object. The method further comprises reconstructing the resulting residual image on the basis of the residual projection data by solving an inverse projection transformation problem that links the residual projection data to the resulting residual image, the resulting residual image representing differences between the reference object and the test object under examination.

Moreover, a computer program for implementing the above-described method when being executed on a computer or signal processor is provided.

In the following, embodiments of the present invention are described in more detail with reference to the figures, in which:

Fig. 1A     is a schematic block diagram that illustrates how residual image data can be reconstructed by using residual projection data that has been determined in the projection domain;

Fig. 1B     schematically illustrates an application of the proposed apparatus and/or method in a context of computed tomography (CT) as the imaging modality;

Fig. 1C     schematically illustrates an example for obtaining the residual projection data;

Fig. 2     is a schematic block diagram of an arrangement in which an image reconstruction device or algorithm which only permits positive-valued input data can be used to process the possibly negative-valued residual projection data;

Fig. 3     is a schematic block diagram illustrating an example of implementation that takes into account prior knowledge about a misalignment between the reference and the test object;

Fig. 4     graphically illustrates an explanation for a proposed processing of the reference image based on misalignment information between the reference object and the test object in order to obtain a difference image; and

Fig. 5     is a schematic block diagram illustrating a further example of implementation that takes into account prior knowledge about a misalignment between the reference and the test object, wherein said a priori knowledge is exploited in the projection domain so that the residual projection data is substantially corrected from misalignment-related deviations.

Definitions:

The below definitions are provided in order to help the reader to understand the present invention by providing illustrative examples, but are by no means to be construed as limiting. Indeed, the method and apparatus may also be employed in different applications, employ different input data (i.e., not necessarily projection data), and/or produce different types of result data.

**image**

one-dimensional (1 D), two-dimensional (2D), or three-dimensional (3D) sampled representation of a physically existing object such that each element (e.g. a pixel or a voxel) represents some physically interpretable feature of the object. For instance, in the case of 3D X-ray tomography, each voxel may represent the absorption coefficient.

**reconstruction**

The computation of an estimate of the image from the measured projection data of the physical object.

**measured projection data**

A signal usually expressed as a vector or a matrix which represents the data acquired by the scanning system.

**object scan**

The procedure through which the measured projection data is acquired.

**reference projection data**

A signal usually expressed as a vector or a matrix that represents the reference data containing the a priori knowledge about the object, e.g., a scan of a known reference object or an earlier recording of the same object

**residual projection data**

A signal usually expressed as a vector or a matrix representing the information left in the measured projection data once the a priori information contained in the reference projection data has been removed.

**registration**

An approach to estimate and correct the misalignment of the test object with respect to the reference object.

**projection intensity**

The X-ray intensity, i.e. the number of photons per detector pixel, which is measured by the detector after the photons have traversed the physically existing object.

**projection line integral**

A reconstruction algorithm typically needs the line integral of the attenuation coefficients of the object which you get by applying the inversion of Lambert Beer's Law (see [1, chapter 2.3, 2.4]) to the measured intensities. This is essentially the negative logarithm of the ratio of the incoming and outgoing number of photons (i.e. the observed intensity by a certain detector pixel). In order to improve the image quality other approaches, e.g. adapted look-up-table (see [1, chapter 9.6] are possible for calculate the projection line integral.

The field of this invention is imaging from measured projection data such as the one obtained by X-ray tomographic scans. Possible applications could be in the field of medical diagnostics as well as industrial non-destructive testing, e.g. localizing defects in manufactured goods on a production line or assessing whether the goods fulfill certain quality standards.

In computed tomography (CT), the object to be scanned is placed between an X-ray source and a detector, which features an array of sensors sensible to the X-ray radiation. With this, the detector captures 2D pictures of the 3D object, which we call projections in this document. By rotating the object relative to the source and detector, it is possible to capture several views (i.e., projections) at different angles of the 3D object. Alternatively, this can be achieved by rotating the detector and the X-ray source around the object, which is mostly done in medical diagnostics. In this document we reference to [1] for the fundamentals on how computed tomography works.

Several techniques exist to acquire the measured projection data. In some applications, to minimize artifacts due to scattering, a line detector is used. In this case, the detector features pixels aligned on a one dimensional line and typically the X-ray source is designed to emit a narrow fan beam. The detector and X-ray source are then moved synchronously to cover the full size of the object. In other applications, the detector features pixels aligned on an arc of a circle. The detector and a fan beam source are rotated around the object while the object is continuously translated in order to cover its full size. Such a setup is usually referred to as helical CT. Helical CT is possible not only in fan-beam geometry, but also in cone-beam geometry, i.e., using a multi-row or flat panel detector instead of a line detector.

No matter how the measured projections have been obtained, in all tomographic applications it is possible to compute an image of the 3D object showing its inner structure by solving an analytical inverse problem. This computation is often referred to as reconstruction. Variations of this technique include the computation of 2D images showing an arbitrary cut of the 3D object (very much used in medical applications to visualize several slices of e.g. a human head), or the so-called 4D tomography, in which an image is reconstructed for different time instants to visualize how the inner structure of the object changes in time. The most widely utilized reconstruction algorithms are based on filtered back projection (FBP) approaches as for instance the well-known Feldkamp method (e.g. see [1, chapter 5 and 7]).

In many applications a short measurement time is required, limiting the number of projections which can be acquired. This is possible, compared to the traditional tomographic approaches, by exploiting a priori information. Such a scheme has been proposed in [6], in which only a certain Region of Interest (RoI) is scanned, i.e., a specific region of an otherwise larger object. Assuming that the composition of the object outside the RoI is known, [6] describes how an image of the RoI can be reconstructed. Following a traditional reconstruction approach (i.e., without the modifications presented in [6]), the part of the object outside of the RoI would lead to strong artifacts in the reconstructed image. The method bears the severe drawback that the spatial support of the region of the object which we need to scan (i.e., the RoI) must be known a priori. For instance, when looking for defects in a manufactured specimen one would have to know already where the defects might appear or be forced to scan the full object. Additionally, the defects would have to be concentrated in a certain region, to once more avoid the need of scanning the full object.

Recently, a new framework for image reconstruction called compressed sensing (CS) has been proposed [4, 2]. Thanks to highly non-linear methods, this theory allows to exploit a different kind of a priori information, namely the knowledge of sparsity. In fact, for certain classes of images it is possible to express the reconstructed image by simple manipulations such that it exhibits sparsity in a proper domain, meaning that a proper transformation of the image is a signal which features very few non-zero elements. This fact has been exploited by [5] in which the reconstructed image is obtained by forcing its total variation to be minimized, which, in other words, forces the reconstructed image to be block-wise homogeneous. The exploitation of this a priori information on the reconstructed image have allowed the authors of [5] to reduce greatly the amount of acquired projection data needed.

This method (and the many other deviations which are based on the computation of the total variation) bear the drawback of necessitating a block-wise homogeneous object, which in many applications is not given. As an example, when aiming at finding small defects in an otherwise fairly homogeneous object, this assumption is violated. Therefore, these methods may implicitly consider small defects as artifacts or noise and hence remove them in the reconstructed image, making them unreliable for such applications.

The authors in [7] exploit the a priori information on the spatial support of the scanned object, since it is known or is fairly easy to estimate in many applications. The drawback of this method is that the degree of reduction in the amount of projection data to be measured is very limited.

In [3], which addressed medical applications, it is assumed that a priori information is available in the form of an image of the subject acquired previously e.g., from a scan of the same subject by means of a traditional tomographic method applied to a large amount of acquired projections. Please note that [3] uses the term "acquired image data" for what we call "measured projection data" while the high quality image is termed "prior image". The a priori information contained in the prior image is exploited during the reconstruction by forcing the sparsity of the difference between the reconstructed image (originating from a second scan featuring much less acquired image data compared to the one from which the prior image has been computed) and the prior image. If the subject has not changed much between the two scans, the aforementioned difference will be indeed sparse, i.e., the signal will exhibit only very few non-zero elements.

This invention provides an image reconstruction method for, for example, X-ray tomographic scans with applications to e.g. non-destructive testing or medical diagnostics. Compared to traditional image reconstruction methods, the proposed image reconstruction method allows to reduce the number of measurements (e.g., the number of projections and/or the number of pixels per projection) while achieving the same reconstruction quality or to achieve a superior reconstruction quality using the same number of measurements. Alternatively, any trade-off between the two extremes can be achieved.

With the goal of reducing the amount of measured projection data that has to be acquired, similarly to existing methods, the proposed invention exploits available a priori information about the object in the reconstruction. The invention differs from the state of the art in at least one of two main aspects. Firstly, the goal of the proposed invention is not to reconstruct a full image of the test object but instead a residual image where the information of a known reference has been removed and only the residual information of the current test object that is not already contained in the known reference is preserved. For instance, in non-destructive material testing, the residual image may be the difference between a reference object and the test object which then primarily only contains the regions where defects have occurred.

The second fundamental difference between the proposed invention and the state of the art is in the type of a priori information that is available and, most importantly, in the way this a priori information is exploited. The invention comprises two fundamental approaches that differ in which type of a priori information is used and how it is applied. We now describe these two approaches in separate sections.

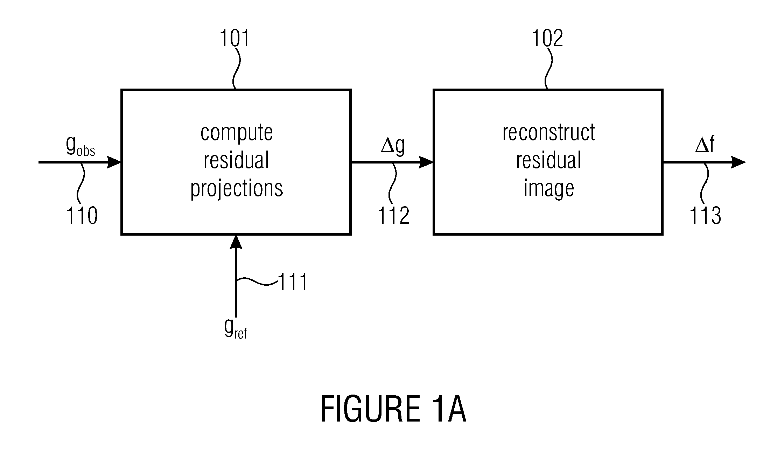

The first approach that is covered by the proposed invention is schematically illustrated in Figure 1A. This first approach differs from the state of the art in that instead of requiring and exploiting the knowledge of a prior image in the reconstruction process (e.g., as done in [3]), the first approach of the proposed invention relies only on the availability of prior knowledge in form of reference projection data, i.e., reference data is evaluated in the projection domain (measurement domain), rather than in the image domain (result or solution domain). This is advantageous since the reference projection data can itself be undersampled, i.e., no densely sampled reference scan is needed at all. The reference projection data can be obtained by scanning a known reference object, or by using the earlier frame of the same object in a 4D-CT setting.

The proposed invention extracts the available a priori information directly from the observed projection data, before starting the reconstruction process. Note that it is advantageous to consider the difference between the measurement and the reference directly in the projection data domain since in this way systematic errors in the imaging process that deviate from the assumed linear mapping (e.g., calibration errors) are not enhanced while incorporating the a priori knowledge in the reconstruction process. This is in contrast to [3], where the prior image is directly incorporated in the reconstruction process.

Additionally, a superior accuracy can be achieved as the difference image is directly reconstructed.

The main idea of the first approach is schematically shown in Figure 1A. There are two main steps in our approach. In the first step, labeled as 101 in Figure 1A, the residual projection data is obtained by comparing the measured projection data with the reference projection data. It takes two inputs: the measured projection data 110, represented as a vector $\boldsymbol{g_{obs}}$ and the reference projection data 111, represented as a vector $\boldsymbol{g_{ref}}$ It produces the residual projection data 112, represented as a vector $\Delta_{\boldsymbol{g}}$ with the goal to remove the information from the measured projection data $\boldsymbol{g_{obs}}$ that is already contained in the reference projection data $\boldsymbol{g_{ref}}$.

The main advantage of step 101 compared to the state of the art is that we already extract the available a priori information in the projection data domain before entering into the reconstruction step (whereas [3] takes a difference in the image domain, during the reconstruction process). Therefore, the reconstruction step does not have to cope with the contribution of the known reference object to the projection data or the reconstructed image and can therefore focus entirely on the residual information. This is advantageous since it makes the reconstruction process faster and the result more accurate.

In one embodiment of step 101, the reference projection data is obtained by scanning a known reference object and taking projections from different angles. The measured projection data is obtained by scanning the test object using the same angles, such that the relative orientation of source, detector and object are fairly identical for the reference and the test objects. In this case, the residual projection data is found by directly relating the measured projection data with the reference projection data, e.g. by taking the ratio of the intensities or the difference of the projection line integral data. In addition, the reference projection data can also be weighted and then related to the measured projection data for allowing the reconstruction of specific regions of the image as well that are known to be different to the reference. In an alternative embodiment, a weighted difference can be considered to give more weight to a priori known regions of interest and disregard regions that are known to be less important, e.g., the surrounding air or the mounting device that holds the object in place.

The second step, labeled as 102 in Figure 1A, performs the reconstruction of the residual image. More precisely, it takes the residual projection data 112 as an input and transforms them into an estimated residual image 113 (resulting residual image), which we represent with a vector $\Delta\boldsymbol{f}$.

Note that the residual reconstructed image may be interpreted as the difference between the reference image and the image of the test object when the residual projection data computation 101 is realized by a simple difference. There are two main differences between the residual image reconstruction 102 and a classical CT reconstruction technique such as SART (Simultaneous Algebraic Reconstruction Technique): Firstly, due to the fact that the residual projection data 112 only contains the residual projection data with respect to the reference projection data, we expect 113 to contain only little information, e.g., a sparse vector with only a few non-zero positions coinciding with the difference of the test object relative to the reference object. This is also exploited by [3], however, in a different manner that requires a reference image to be available. As discussed above, [3] takes the difference in the image domain, i.e., a difference between the known reference image and the estimated image, during the reconstruction process. In contrast, we remove the a priori information in the projection domain, before entering the reconstruction step, which leads to a faster and more accurate reconstruction of the residual image. Secondly, while in a classical CT context, the projection data as well as the reconstructed image have non-negative values (since negative values have no physical meaning), for 102 both positive as well as negative values can occur.

The task of the block 102 can be precisely defined as a method to solve a minimization problem defined as

$$\arg \min_{\Delta f} \left( h(\Delta f) + \lambda \cdot \left\| A\Delta f - \Delta g \right\|_2^2 \right) , \tag{1}$$

where A is the linear sensing (projection) operator, i.e., the mapping from the residual image that we want to reconstruct to the residual projection data that is used as input. Moreover, $h(\Delta f)$ maps the residual image $\Delta f$ to a scalar number which quantifies the sparsity of $\Delta f$. In this way, by minimizing $h(\Delta f)$ sparse solutions are promoted. For instance, $h(\Delta f)$ could be a p-norm of $\Delta f$ which is known to promote sparse solutions for certain values of p, e.g., p = 1. Finally, $\lambda$ is a positive scalar that controls the trade-off between the sparsity-promoting term $h(\Delta f)$ and the data fidelity term

$\left\| A\Delta f - \Delta g \right\|_2^2$ (which measures how well the projection of the reconstructed residual image $\Delta f$ matches the residual projection data $\Delta g$).

The cost function (1) can be solved by a person skilled in numerical optimization. In particular, the optimization problem (1) can be solved by iterative methods such as a gradient descent method.

The gradient of (1) contains a weighted sum of the gradient of the sparsity-promoting term and the gradient of the data fidelity term. To improve the convergence, the weighting term can be adapted over iterations. In addition to the state-of-the-art, the convergence of this iterative procedure can be further improved by modifying the gradient of the sparsity-promoting term. In the simplest form, it is given by the sign function (the gradient of the 1-norm), however, we can use a more aggressive strategy (e.g., gradients of p-norms for p < 1), an adaptive strategy (e.g., enforcing sparsity more aggressively first and then gradually relaxing it), or a ROI-based strategy (e.g., taking into account different regions of the image that are known to be more or less prone to smaller or larger errors). In computer graphics this concept is known as level of detail (LOD) and these techniques can also be used in the CT reconstruction process, as described in, for example, [8] and [9].

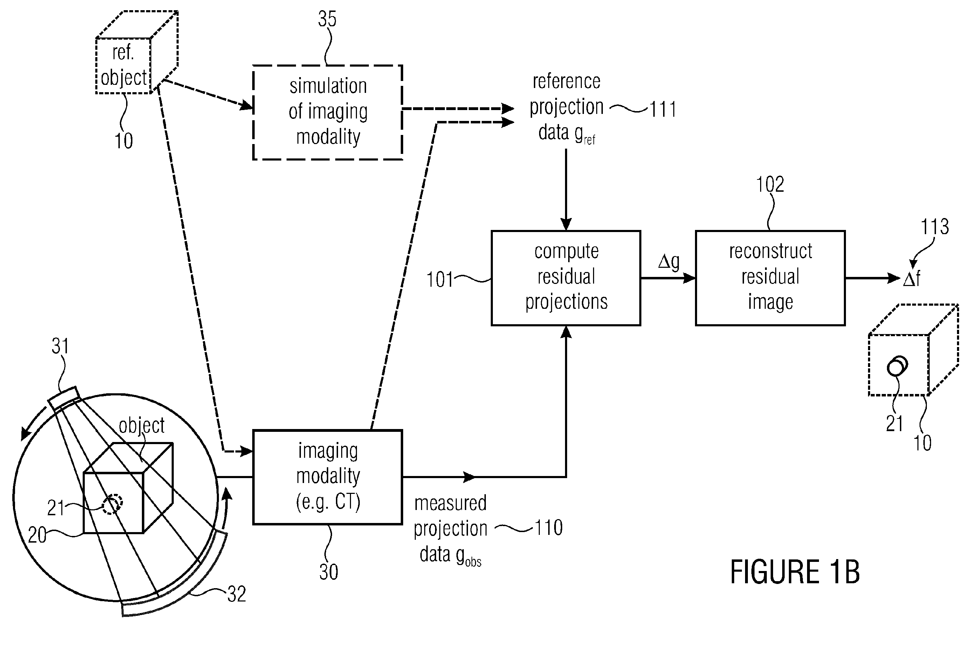

Figure 1B schematically illustrates a usage scenario for the proposed apparatus and method. A test object 20 is examined using an imaging modality 30. The test object 20 may be a manufactured piece, for example a cast piece or a forged piece. The imaging modality may be computed tomography (CT) that is used on the test object in order to determine whether the test object 20 has any defects, such as cavities, cracks or the like. The imaging modality 30 comprises a radiation source 31, such as an X-ray tube, and typically a detector arrangement 32. The radiation source 31 and the detector arrangement 32 typically rotate around the test object 20 in order to produce a plurality of projections at different angles. Alternatively, the test object 20 may be rotated and/or translated itself.

A reference object 10 is also considered. The reference object 10 may be a physically existing object or it may be a model, for example a CAD model of the test object 20. The reference object 10 is typically substantially ideal and error-free. In case the reference object 10 is a physically existing object, it may be scanned using the imaging modality 30 in order to produce reference projection data 111. This may have been done some time before the scan of the test object 20 and the reference projection data 111 may have been stored for later usage when scanning the test object 20. Furthermore, it is possible that the reference projection data 111 has been acquired with substantially the same resolution as the measured projection data 110, so that a direct comparison between the reference projection data 111 and the measured projection data 110 is possible. However, it may also be possible that the reference object 10 has been scanned at a higher resolution (e.g., angle resolution and z-axis resolution in the case of a helical CT scan). When comparing the reference projection data 111 with the measured projection data 110 only those samples within the high-resolution reference projection data 111 might be used that geometrically correspond best to one of the samples in the measured projection data 110 having a lower resolution.

In case the reference object 10 is not a physically existing object but rather a model, for example a CAD model, the imaging modality 30 may be simulated by means of a simulation 35. The simulation 35 generates the reference projection data 111.

The test object 20 may differ from the reference object 10 by a difference 21, which may be a cavity, a crack, a piece of material having another density than the surrounding material, or other possible differences. After the measured projection data 110 and the reference projection data 110 have been processed by the proposed apparatus or method, the resulting residual image 113 is obtained in which only the difference(s) 21 between the test object 20 and the reference object 10 are contained. As the reference object 10 is known anyway, it can be overlaid on the resulting residual image 113 in order to be able to locate the difference(s) 21.

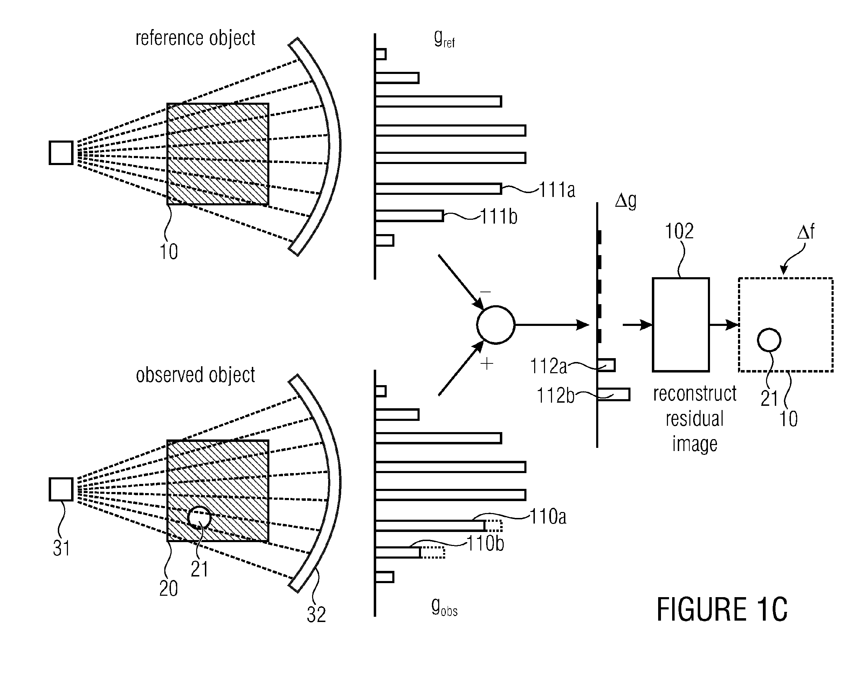

Figure 1C illustrates the determination of the residual reference data $\Delta g$ 112. When scanning the reference object 10 with the imaging modality a specific profile of the reference projection data $g_{ref}$ is obtained. Likewise, when scanning the test object 20 with the imaging modality a specific profile of the measured projection data $g_{obs}$ is obtained. The difference 21 in the test object 20 results in different values for two samples in the measured projection data $g_{obs}$ because the rays that are picked up by two detector elements of the detector arrangement 32 have traversed the difference 21. In the depicted example the two affected samples 110a and 110b are slightly smaller than the corresponding samples 111 a, 111 b of the reference projection data $g_{ref}$ 111, which may hint at the difference 21 having a higher absorption coefficient than the original material of the reference object 10.

When comparing the measured projection data $g_{obs}$ with the reference projection data $g_{ref}$, the residual projection data $\Delta g$ 112 is obtained. It can be seen that the residual projection data $\Delta g$ 112 contains mostly zero elements and only two sample values 112a, 112b are actually non-zero, i.e., the residual projection data $\Delta g$ 112 is relatively sparse. Typically, the test object will also be scanned at further angles and the measured projection data $g_{obs}$ will be compared with corresponding reference projection data $g_{ref}$ for the same or approximately the same projection angle. The same procedure may be repeated for different translations of the test object with respect to the imaging modality along an axis that is substantially perpendicular to the projection plane. The residual projection data is then provided to the image reconstruction unit 102 to reconstruct the residual image $\Delta f$ 113 which typically only contains a representation of the difference 21. The image of the reference object 10 may be overlaid in order to localize the difference 21 within the object. The difference 21 may represent a defect of the test object 20.

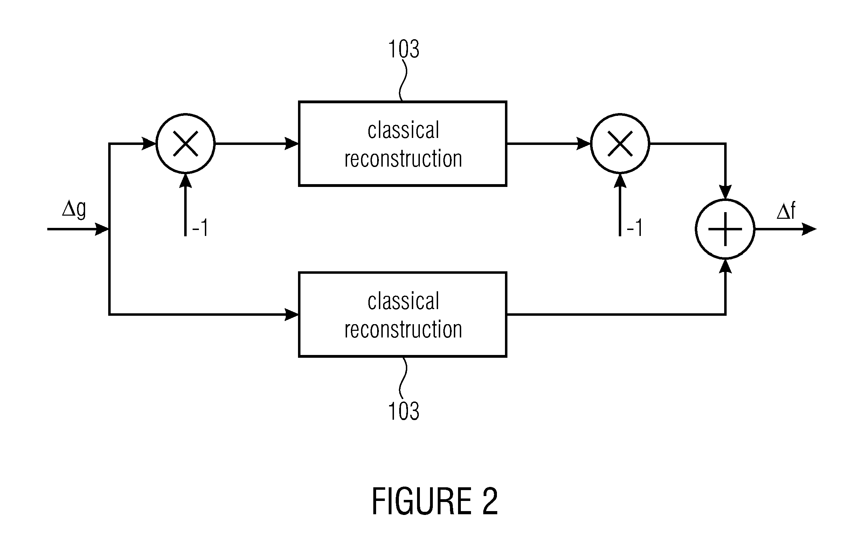

Figure 2 introduces a sub-optimal strategy to solve (1) using existing reconstruction strategies. This may be advantageous when we want to exploit highly-optimized implementations of well-known CT reconstruction techniques such as SART. To take into account the existence of negative values, we use two branches. The lower branch passes the residual projection data directly into a classical CT reconstruction technique. These techniques may typically include a clipping of negative values in the projection data as well as the reconstructed volumes, which is done because negative values do not have a physical meaning (such as intensity for the projections or absorption coefficients (for the reconstructed image) in traditional imaging. Consequently, the negative values are lost in the lower branch. The upper branch negates the projection data before passing them into the classical CT reconstruction techniques. Therefore, the opposite happens and the values that were originally positive are lost due to the inherent clipping in the reconstruction algorithms. After both reconstructions have been completed, the residual image may be computed by subtracting the reconstructed image in the upper branch from the reconstructed image in the lower branch.

In accordance with Figure 2, the apparatus may comprise a residual projection data converter configured to modify the residual projection data so that at least a portion of the modified residual projection data comprises positive values only, wherein said portion of the modified residual projection data is provided to the image reconstruction unit (102; 202; 302). In Figure 2, the residual projection data converter comprises the multiplier (inverter) at the input of the upper residual image reconstruction unit 103 ("classical reconstruction"). This multiplier or inverter inverts the entire residual projection data $\Delta g$, and the residual image reconstruction unit 103 clips any negative values. The schematic block diagram shown in Figure 2 further shows a residual image data back-converter which comprises the multiplier at the output of the upper residual image reconstruction unit 103. The back-converter compensates for the modification of the input data (projection data) by inverting the partial resulting residual image that has been determined by the upper residual image reconstruction unit 103.

According to some examples of implementation, the portion of the modified residual projection data which exclusively comprises positive values may be provided to a first image reconstruction unit 102, 202, 302. The apparatus may further comprise a second image reconstruction unit 102, 202, 302 to which the unmodified residual projection data, or a positive-valued portion thereof, may be provided. In particular, the residual data converter may be configured to invert the residual projection data so that negative values become positive, and vice versa. Furthermore, the first and second image reconstruction units may be configured to perform themselves a clipping of negative values, or such clipping may be performed by dedicated elements before the residual projection data are provided to the first or second image reconstruction units 102, 202, 302. Once the first image reconstruction unit has determined an intermediate resulting residual image on the basis of the originally negative values within the residual projection data, this intermediate resulting residual image is inverted back again in order to be combined with a second intermediate resulting residual image generated by the second residual image reconstruction unit on the basis of the unmodified, originally positive-valued portion of the residual projection data $\Delta g$.

In addition or in the alternative, the apparatus may further comprise a residual image data back-converter configured to modify the resulting residual image $\Delta f$ so that a distortion of the resulting residual image $\Delta f$ caused by the previous modification of the residual projection data $\Delta g$ is reduced or substantially compensated for.

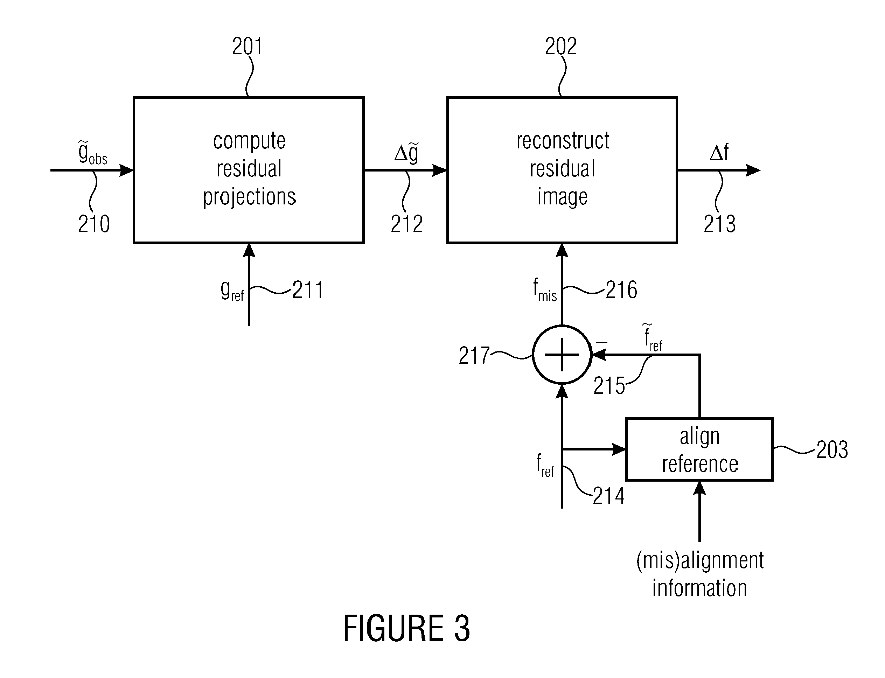

Referring now to Figures 3 to 5, a second approach is described. In particular, in scenarios where the current test object 20 is typically not aligned to the object data contained in the a priori known reference image, the reconstruction algorithm in Figure 1 may not appropriately recover the residual image. In this section, we propose a second approach which explicitly addresses this issue by taking into account the misalignment between the current test object 20 and the reference image. The main difference of the second approach with respect to the first approach is that the second approach assumes additional information to be available. Firstly, we assume that the information about the object misalignment is known. Secondly, we assume that a reference image $f_{ref}$ is available, which is not needed in Approach I. In other words, while the first approach described in connection with Figure 1A does not use the reference image as input (which is required in, for example, the method according to reference [3]), the second approach (which does use the reference image) according to Figures 3 to 5 exploits the registration information (which is not at all used in, for example, the method according to reference [3]).

Note that [3] also explicitly uses a reference image $f_{ref}$ for reconstruction. However, in [3], it is assumed that the test object 20 and the reference object 10 are aligned so that the difference between the target image of the test object 20 and the reference image can be taken directly with the goal to obtain a sparse image. In contrast, the second approach according Figures 3 to 5 uses the reference image and the known misalignment in order to recover a sparse residual image, obtained e.g. by subtracting the image of our test object 20 and the reference image, implicitly correcting the known misalignment during the reconstruction (variant 1 of the second approach) or before the reconstruction (variant 2 of the second approach). The information about the misalignment is not addressed in detail in the method proposed by [3].

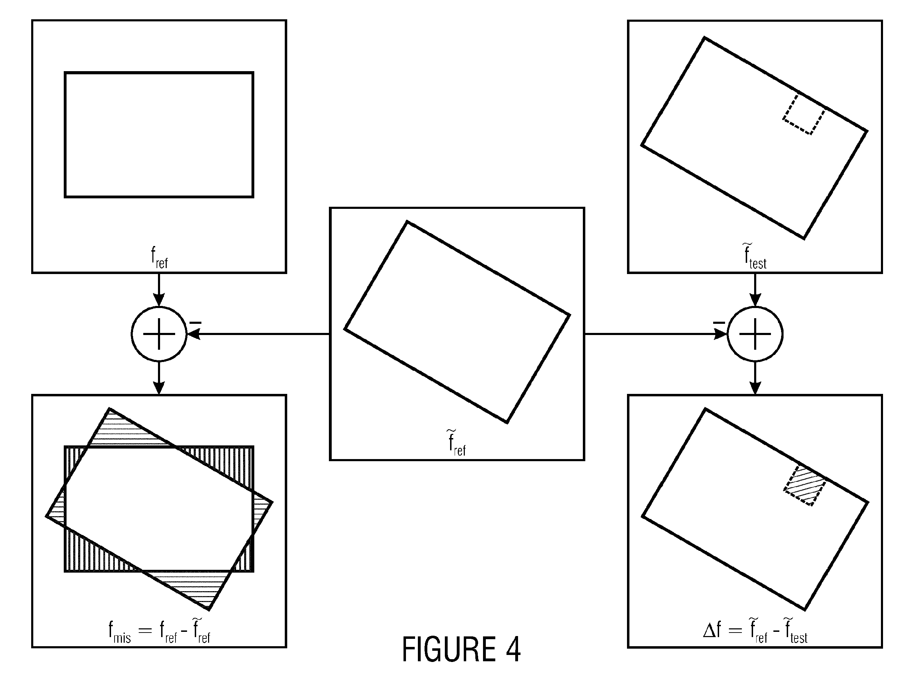

The second approach can be further subdivided into two different methods which differ in the way that the known reference image and the known misalignment is taken into account. The two different methods or variants are shown in Figure 3 and 4 and are discussed in below.

Figure 3 shows the first method/variant that takes into account prior knowledge about the misalignment between the reference object 10 and the test object 20 in the reconstruction process. Prior information is assumed to be available in the form of the reference projection data $g_{ref}$ 211, the reference image $f_{ref}$ 214 and the misalignment of the test object 20 with the reference image. The reference image 214 of the proposed method can in principle be obtained from traditional image reconstruction of a densely sampled version of the reference projection data if available or, alternatively, directly from synthesized image data (e.g., a CAD reference (CAD: Computer Aided Design)). In a first step, labeled as 201 in Figure 3, the residual projection data $\Delta\tilde{g}$ 212 is calculated by using the measured projection data $\tilde{g}_{obs}$ 210 and the reference projection data $g_{ref}$ 211. This step is similar to step 101 in Figure 1 and aims at removing the prior knowledge about the test object 20 from the measured projection data 210 $(\tilde{g}_{obs})$. However, note that at this step the information about the misalignment between the reference and the test object 20 is still contained in the residual projection data 212 $(\Delta\tilde{g})$.

The information about the misalignment between the reference and the current test object 20 is used in box 203 to align (e.g. rotate and/or translate) the reference image 214 with respect to the test object 20. The modified reference image $\tilde{f}_{ref}$ 215, which is now aligned to the current test object 20, is then subtracted from the reference image 214 yielding the difference image $f_{mis}$ 216. The difference image 216 is then fed to the reconstruction box 202.

In a second step, the reconstruction of the residual image is performed in 202 using as inputs the residual projection data 212 $(\Delta\tilde{g})$ and the difference image 216 $(f_{mis})$. The reconstruction step 202 is a block that solves an optimization problem to find the sparse residual image $\Delta f$, taking into account the misalignment $f_{mis}$ in the data fidelity term (which measures how well the projection of the reconstructed residual image matches the residual projection data $\Delta\tilde{g}$. In the special case that 201 finds $\tilde{g}$ via a simple difference $g_{ref} - g_{obs}$, the cost function solved by 202 takes the following form

$$\arg\min_{\Delta f} \left( h(\Delta f) + \lambda \cdot \left\| A(\Delta f + f_{mis}) - \Delta\tilde{g} \right\|_2^2 \right) \quad, \qquad (2)$$

On the other hand, if 201 incorporates a weighted difference, these weights must be considered in (2) as well. Note that (2) is similar to the reconstruction 102 in Figure 1 which solves the optimization problem or cost function (1). However, in (2), the signal $f_{mis}$ is additionally contained in the data fidelity term to correct the misalignment between the current test object 20 and the object data contained in the reference image 214. The cost function (2) can be solved by a person skilled in numerical optimization. In particular, it can be solved by iterative methods such as a gradient descent method.

Figure 4 further illustrates the signals $f_{ref}$, $\tilde{f}_{ref}$, and $f_{mis}$. The known reference image $f_{ref}$ is shown in the top-left corner of Figure 4. We assume that our test object 20 (whose image we call $\tilde{f}_{test}$, shown in the top-right corner of Figure 4) is given by a rotated version of the known reference image (which we call $\tilde{f}_{ref}$, shown in the middle of Figure 4) from which the desired residual image $\Delta \boldsymbol{f}$ is subtracted so that $\tilde{\boldsymbol{f}}_{test}$ - $\tilde{\boldsymbol{f}}_{ref}$ - $\Delta \boldsymbol{f}$. The difference between the reference image $\boldsymbol{f_{ref}}$ and the misaligned version $\tilde{\boldsymbol{f}}_{ref}$ is called $\boldsymbol{f}_{mis} = f_{ref} - \tilde{f}_{ref}$. It is shown in the bottomleft corner of Figure 4, where vertically hatched and horizontally hatched shapes indicate positive and negative values, respectively. In the cost function (2) that is solved by step 202, we optimize over the sparse residual image $\Delta \boldsymbol{f}$, enforcing its sparsity via the term $h(\Delta \boldsymbol{f})$. At the same time, our residual projections $\Delta \boldsymbol{g}$, which are found from the difference $\boldsymbol{g_{ref}}$ - $\boldsymbol{g_{obs}}$ correspond to $f_{ref} - (\tilde{f}_{ref} - \Delta \boldsymbol{f}) = f_{mis} + \Delta \boldsymbol{f}$ in the image domain. This explains why $f_{mis} + \Delta \boldsymbol{f}$ is used in the data fidelity term in (2).

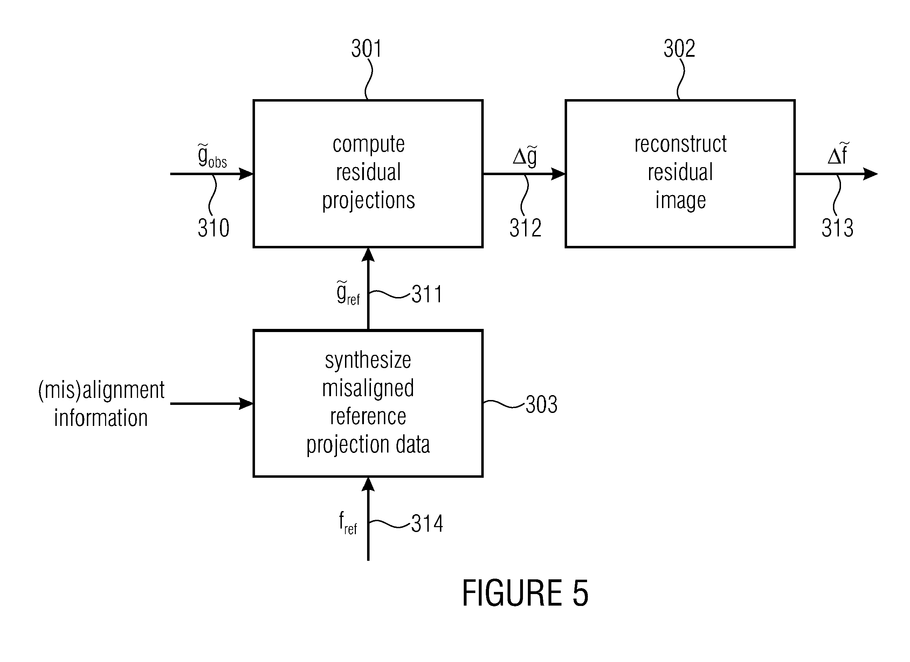

An alternative to the first method/variant to incorporate the known misalignment is shown in Figure 5. For this second method/variant to realize the second approach (second approach takes into account misalignment information), it is assumed that we only know the reference image $\boldsymbol{f_{ref}}$ 314 as well as the misalignment of the test object 20 with the reference image. From these, the step labeled 303 synthesizes a virtual reference projection data set $\tilde{\boldsymbol{g}}_{ref}$ 311, which emulates a scan of our reference object 10 aligned in such a way that it matches the alignment of the current test object 20. In order to synthesize $\tilde{\boldsymbol{g}}_{ref}$ in step 303, there are at least two options. The first option is to first change the alignment of $\boldsymbol{f_{ref}}$ (by directly rotating and/or shifting the image) and then using a forward model of the scanner (imaging modality) that emulates the process of taking projections of the re-aligned reference image. The second option is to incorporate the misalignment into the forward model and applying it directly to $\boldsymbol{f_{ref}}$, e.g., virtually rotating the light source and the detector such that the projections are taken in such a way as if the reference object 10 itself was misaligned.

The step 301 compares the synthesized reference projection data 311 with the measured projection data 310 with the goal to remove all the information about the reference that is included in the measured projection data 310. It may use for example the same mechanism as applied in step 101 in Figure 1.

The output $\Delta_{\tilde{g}}$ (312) of box 301 corresponds to a residual projection data set that would be obtained for a reference projection data set that is aligned to our current test object 20. It is input into step 302 which performs the reconstruction of the residual projection data set into an estimated residual image $\Delta \check{f}$ (313). Step 302 operates similar to step 102 in Figure 1: it solves the optimization problem

$$\underset{\Delta \check{f}}{\arg\min} \quad \left( \square(\Delta \check{f}) + \lambda \cdot \left\| A\Delta \check{f} - \Delta \check{g} \right\| \right) \qquad (3)$$

The cost function (3) can be solved by a person skilled in numerical optimization. In particular, it can be solved by iterative methods such as a gradient descent methods. Note that the reconstructed residual image $\Delta \check{f}$ (313) is aligned such that it matches with the test object 20 and therefore differs from our original reference image $f_{ref}$. Therefore, the known misalignment must be taken into account when we localize possible defects from $\Delta \check{f}$ .

The two approaches may be expressed as lists, as follows:

Approach I:

1. Acquire the reference projection data
2. Acquire the measured projection data by scanning the object under study
3. Compute the residual projection data from the measured projection data and the reference projection data
4. Select a first estimate for the reconstructed residual image
5. Obtain the reconstructed residual image from the estimate for the reconstructed residual image and the residual projection data

Approach II - Method/Variant 1:

1. Acquire the reference projection data. The reference projection data are obtained from a scan of the reference object or calculated from a synthesized reference image.
2. Acquire the measured projection data by scanning the object under study
3. Compute the residual projection data from the measured projection data and the reference projection data
4. Align (e.g. rotate and translate) the reference image to the test object
5. Calculate the difference reference image from the reference and the aligned reference image
6. Select a first estimate for the reconstructed residual image
7. Obtain the reconstructed residual image from the estimate for the reconstructed residual image, the residual projection data and the difference reference image

Approach II - Method/Variant 2:

1. Acquire the measured projection data by scanning the object under study
2. Calculate the reference projection data directly from the reference image data

- (Option 1: Change the alignment of the reference image data with respect to the alignment of the current test object and then calculate the reference projection data from the aligned reference image.
- Option 2: Incorporate the misalignment between the current test object and the reference image into the forward model of the scanner and apply it directly to the reference image.)

3. Compute the residual projection data from the measured projection data and the reference projection data
4. Select a first estimate for the reconstructed residual image
5. Obtain the reconstructed residual image from the estimate for the reconstructed residual image, the residual projection data and the difference reference image

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a CD, a ROM, a PROM, an EPROM, an EEPROM or a FLASH memory, having electronically readable control signals stored thereon, which cooperate (or are capable of cooperating) with a programmable computer system such that the respective method is performed.

Some embodiments according to the invention comprise a non-transitory data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

**References**

**EP 2 922 028 A1**

[1] T. M. Buzug. Computed Tomography: From Photon Statistics to Modern Cone-Beam CT. Springer-Verlag, Berlin/Heidelberg, 2008.

[2] E.J. Candes. Robust uncertainty principles: exact signal reconstruction from highly incomplete frequency information. IEEE Transactions on Information theory, 52:489-509, 2006.

[3] G.-H. Chen. Method for prior image constrained image reconstruction. *Patent No:* US 8, 509, 514 B2.

[4] D.L. Donoho. Compressed sensing. IEEE Transactions on Information theory, 52:1289-1306, 2006.

[5] Sidky et al. Image reconstruction from limited or incomplete data. *US Patent Application Publication No:* US 2011/0044546 A1.

[6] Toner et al. Region of interest tomography employing a differential scanning technique. *Patent No:* US 4,878,169.

[7] Trzasko et al. Method for compressed sensing image reconstruction using a priori knowledge of spatial support. *US Patent Application Publication No:* US 2011/0058719 A1.

[8] James Gregson, Michael Krimerman, Matthias B. Hullin, and Wolfgang Heidrich. Stochastic tomography and its applications in 3d imaging of mixing fluids. ACM Trans. Graph. (Proc. SIGGRAPH 2012), 31(4):52:1-52:10, 2012.

[9] A. Jung. Algebraische Rekonstruktionstechnik für die Industrielle Computertomographie. Master's thesis, Institut für Informatik, Lehrstuhl für graphische Datenverbeitung, Friedrich-Alexander-Universitat Erlangen-Nurnberg, 2013.

**Claims**

1. Apparatus comprising

   a residual projection data processor (101; 201; 301) configured to determine residual projection data ($\Delta_g$; $\Delta_{\tilde{g}}$; $\Delta\breve{g}$) by cancelling reference projection data ($g_{ref}$; $\tilde{g}_{ref}$) from measured projection data ($g_{obs}$; $\tilde{g}_{obs}$), wherein the measured projection data ($g_{obs}$; $\tilde{g}_{obs}$) represents a measured projection of a test object under examination obtained by an imaging modality, and wherein the reference projection data ($g_{ref}$; $\tilde{g}_{ref}$) represents a projection of a reference object; and

   an image reconstruction unit (102; 202; 302) configured to reconstruct a resulting residual image ($\Delta f$; $\Delta\tilde{f}$; $\Delta\breve{f}$) on the basis of the residual projection data ($\Delta_g$; $\Delta_{\tilde{g}}$; $\Delta\breve{g}$) by solving an inverse projection transformation problem that links the residual projection data ($\Delta g$; $\Delta_{\tilde{g}}$; $\Delta\breve{g}$) to the resulting residual image ($\Delta f$; $\Delta\tilde{f}$; $\Delta\breve{f}$), the resulting residual image ($\Delta f$; $\Delta\tilde{f}$; $\Delta\breve{f}$) representing differences between the reference object and the test object under examination.

2. Apparatus according to claim 1, wherein the residual projection data processor is configured to compare the reference projection data ($g_{ref}$; $\tilde{g}_{ref}$) with the measured projection data ($g_{obs}$; $\tilde{g}_{obs}$) and to set the residual projection data ($\Delta_g$; $\Delta_{\tilde{g}}$; $\Delta\breve{g}$) to zero when corresponding data samples of the reference projection data ($g_{ref}$; $\tilde{g}_{ref}$) and the measured projection data ($g_{obs}$; $\tilde{g}_{obs}$) are substantially equal.

3. Apparatus according to claim 1 or 2, wherein the inverse projection problem is defined as

$$\arg\min_{\Delta f}\left(h(\Delta f) + \lambda \cdot \left\|A\Delta f - \Delta g\right\|_2^2\right)$$

   where A is an operator that describes a projection process performed by the imaging modality and maps an image in an image domain to corresponding projection data in a projection domain;

$h(\Delta \boldsymbol{f})$ is a sparsity-promoting term that maps the residual image $\Delta \boldsymbol{f}$ to a scalar number which quantifies a sparsity of $\Delta \boldsymbol{f}$;

A is a parameter that controls a trade-off between the sparsity-promoting term and a data fidelity term

$$\left\| A\Delta f - \Delta g \right\|_2^2 .$$

**4.** Apparatus according to any one of claims 1 to 3, further comprising

a residual projection data converter configured to modify the residual projection data so that at least a portion of the modified residual projection data comprises positive values only, wherein said portion of the modified residual projection data is provided to the image reconstruction unit (102; 202; 302).

**5.** Apparatus according to any one of claims 1 to 4, further comprising a reference data alignment (203; 303) configured to align reference data to object data on the basis of a misalignment information that describes a misalignment of the test object with respect to the reference object.

**6.** Apparatus according to claim 5, wherein the reference alignment (203) is configured to align a reference image ($\boldsymbol{f}_{ref}$) to the test object using the misalignment information to obtain an aligned reference image ; wherein the apparatus further comprises a reference image processor (217) configured to generate a difference image ($\boldsymbol{f}_{mis}$) between the reference image ($\boldsymbol{f}_{ref}$, 214) and the aligned reference image ($\tilde{\boldsymbol{f}}_{ref}$); and wherein the residual image reconstruction is configured to use the difference image ($\boldsymbol{f}_{mis}$) for correcting the misalignment between the test object and the reference image ($\boldsymbol{f}_{ref}$, 214).

**7.** Apparatus according to claim 5, wherein the reference alignment (303) is configured to generate aligned reference projection data ($\tilde{\boldsymbol{g}}_{ref}$, 311) on the basis of the reference image ($\boldsymbol{f}_{ref}$, 214) and the misalignment information; and wherein the residual projection data processor (301) is configured to use the aligned reference projection data ($\tilde{\boldsymbol{g}}_{ref}$, 311) as the reference projection data ($\boldsymbol{g}_{ref}$, 211).

**8.** Method for obtaining a resulting residual image showing differences between a reference object and a test object, the method comprising:

determining residual projection data ($\Delta g$; $\Delta_{\tilde{g}}$; $\Delta \breve{g}$ ) by cancelling reference projection data ($g_{ref}$; $\tilde{g}_{ref}$) from measured projection data ($g_{obs}$; $\tilde{g}_{obs}$), wherein the measured projection data ($g_{obs}$; $\tilde{g}_{obs}$) represents a measured projection of the test object under examination obtained by an imaging modality, and wherein the reference projection data ($g_{ref}$; $\tilde{g}_{ref}$) represents a projection of the reference object; and

reconstructing the resulting residual image ($\Delta f$; $\Delta \tilde{f}$; $\Delta \breve{f}$ ) on the basis of the residual projection data ($\Delta g$; $\Delta_{\tilde{g}}$; $\Delta \breve{g}$ ) by solving an inverse projection transformation problem that links the residual projection data ($\Delta g$; $\Delta_{\tilde{g}}$; $\Delta \breve{g}$ ) to the resulting residual image ($\Delta f$; $\Delta \tilde{f}$; $\Delta \breve{f}$ ), the resulting residual image ($\Delta f$; $\Delta \tilde{f}$; $\Delta \breve{f}$ ) representing differences between the reference object and the test object under examination.

**9.** Method according to claim 8, wherein determining the residual projection data comprises:

comparing the reference projection data ($g_{ref}$; $\tilde{g}_{ref}$) with the measured projection data ($g_{obs}$; $\tilde{g}_{obs}$) and setting the residual projection data ($\Delta g$; $\Delta_{\tilde{g}}$; $\Delta \breve{g}$ ) to zero when corresponding data samples of the reference projection data ($g_{ref}$; $\tilde{g}_{ref}$) and the measured projection data ($g_{obs}$; $\tilde{g}_{obs}$) are substantially equal.

**10.** Method according to claim 8 or 9, wherein the inverse projection problem is defined as

$$\arg \min_{\Delta f} \left( h(\Delta f) + \lambda \cdot \left\| A\Delta f - \Delta g \right\|_2^2 \right)$$

where **A** is an operator that describes a projection process performed by the imaging modality and maps an image in an image domain to corresponding projection data in a projection domain;

$h(\Delta f)$ is a sparsity-promoting term that maps the residual image $\Delta f$ to a scalar number which quantifies a sparsity of $\Delta f$;

A is a parameter that controls a trade-off between the sparsity-promoting term and a data fidelity term

$$\left\| A\Delta f - \Delta g \right\|_2^2 .$$

**11.** Method according to any one of claims 8 to 10, further comprising:

modifying the residual projection data so that at least a portion of the modified residual projection data comprises positive values only, wherein said portion of the modified residual projection data is provided to the image reconstruction unit (102; 202; 302).

**12.** Method according to any one of claims 8 to 11, further comprising:

aligning reference data to object data on the basis of a misalignment information that describes a misalignment of the test object with respect to the reference object.

**13.** Method according to claim 12, wherein aligning reference data to object data comprises aligning a reference image ($f_{ref}$) to the test object using the misalignment information to obtain an aligned reference image; wherein the method further comprises generating a difference image ($f_{mis}$) between the reference image ($f_{ref}$, 214) and the aligned reference image ($\tilde{f}_{ref}$); and reconstructing the resulting residual image is based on the difference image ($f_{mis}$) for correcting the misalignment between the test object and the reference image ($f_{ref}$, 214).

**14.** Method according to claim 12, wherein aligning reference data to object data comprises generating aligned reference projection data ($\tilde{g}_{ref}$, 311) on the basis of the reference image ($f_{ref}$, 214) and the misalignment information; and wherein determining the residual projection data ($\Delta g$; $\Delta \tilde{g}$; $\Delta \breve{g}$) is based on the aligned reference projection data ($\tilde{g}_{ref}$, 311) as the reference projection data ($g_{ref}$, 211).

**15.** A computer program for implementing the method of any one of claims 8 to 14 when being executed on a computer, processor, or signal processor.

$g_{obs}$ 110 → **101** compute residual projections → $\Delta g$ 112 → **102** reconstruct residual image → $\Delta f$ 113

$g_{ref}$ 111

FIGURE 1A

FIGURE 1B

FIGURE 1C

FIGURE 2

FIGURE 3

FIGURE 4

EP 2 922 028 A1

FIGURE 5

EP 2 922 028 A1

Europäisches
Patentamt

European
Patent Office

Office européen
des brevets

# EUROPEAN SEARCH REPORT

Application Number

EP 14 16 0311

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 192 120 A (GEN ELECTRIC GEN ELECTRIC [US]) 31 December 1987 (1987-12-31) * abstract * * figures 1-7 * ----- | 1-15 | INV. G06T11/00 |
| X | WO 2008/099314 A2 (PHILIPS INTELLECTUAL PROPERTY [DE]; KONINKL PHILIPS ELECTRONICS NV [NL] 21 August 2008 (2008-08-21) * the whole document * ----- | 1-15 | |
| X | US 2007/076928 A1 (CLAUS BERNHARD E H [US] ET AL CLAUS BERNHARD ERICH HERMANN [US] ET AL) 5 April 2007 (2007-04-05) * the whole document * ----- | 1-15 | |

TECHNICAL FIELDS
SEARCHED (IPC)

G06T

The present search report has been drawn up for all claims

| Place of search | Date of completion of the search | Examiner |
|---|---|---|
| Munich | 9 September 2014 | Leclercq, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 14 16 0311

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2014

| Patent document cited in search report | | Publication date | Patent family member(s) | | Publication date |
|---|---|---|---|---|---|
| GB 2192120 | A | 31-12-1987 | DE | 3716988 A1 | 14-01-1988 |
| | | | FR | 2600442 A1 | 24-12-1987 |
| | | | GB | 2192120 A | 31-12-1987 |
| | | | IT | 1204649 B | 10-03-1989 |
| | | | JP | S6325538 A | 03-02-1988 |
| WO 2008099314 | A2 | 21-08-2008 | NONE | | |
| US 2007076928 | A1 | 05-04-2007 | NONE | | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 8509514 B2
- US 20110044546 A1
- US 4878169 A
- US 20110058719 A1

### Non-patent literature cited in the description

- **T. M. BUZUG.** Computed Tomography: From Photon Statistics to Modern Cone-Beam CT. Springer-Verlag, 2008
- **E.J. CANDES.** Robust uncertainty principles: exact signal reconstruction from highly incomplete frequency information. *IEEE Transactions on Information theory,* 2006, vol. 52, 489-509
- **D.L. DONOHO.** Compressed sensing. *IEEE Transactions on Information theory,* 2006, vol. 52, 1289-1306
- **JAMES GREGSON ; MICHAEL KRIMERMAN ; MATTHIAS B. HULLIN ; WOLFGANG HEIDRICH.** Stochastic tomography and its applications in 3d imaging of mixing fluids. *ACM Trans. Graph. (Proc. SIGGRAPH 2012),* 2012, vol. 31 (4), 52.1-52.10
- Algebraische Rekonstruktionstechnik für die Industrielle Computertomographie. **A. JUNG.** Master's thesis. Institut für Informatik, 2013